# EUROPEAN PATENT SPECIFICATION

(11) **EP 1 941 092 B1**
(45) Date of publication and mention of the grant of the patent: **08.12.2010**
(21) Application number: 06802725.9
(22) Date of filing: 01.09.2006
(51) Int. Cl.: D06C 21/00, D21F 1/00, D21F 7/08

(54) **A NEEDLED BELT WITH HIGH THICKNESS AND ELASTICITY**
NADELBAND HOHER DICKE UND ELASTIZITÄT
COURROIE AIGUILLETEE PRESENTANT UNE EPAISSEUR ET UNE ELASTICITE ELEVEES

(30) Priority: 02.09.2005 US 714165 P
(43) Date of publication of application: 09.07.2008
(73) Proprietor: ALBANY INTERNATIONAL CORP., Albany, New York 12204 (US)
(72) Inventor: CASSARINO, Giancarlo, I-30030 Venice XX (IT)
(74) Representative: Bugnion Genève
(86) International application number: PCT/US2006/034053
(87) International publication number: WO 2007/027909

(56) References cited:
- EP-A- 1 703 009
- EP-A1- 0 446 355
- WO-A-2004/072368
- DE-A1- 2 361 711
- GB-A- 2 332 916
- US-A- 5 233 733
- US-A1- 2005 181 694

## Description

### BACKGROUND OF THE INVENTION

### Field of the Invention

The instant invention relates generally to the production of textiles. More specifically, the instant invention relates to a textile machine belt that is used to finish or compact knitted fabrics.

### Background of the Invention

Generally, machine fabrics or belts of this type are used in the manufacturing of textiles. More specifically, textile machine belts of a type similar to that of the instant invention, are used as so-called compacting belts. Compacting belts are used on special machines (compacting machines) to render materials, such as knitted fabrics, shrinkproof. Materials that have been processed by a compacting machine remain de facto shrinkproof during the first wash. This process is commonly used in the production of clothing.

A standard belt used on a textile compacting machine is usually relatively thick, ranging from between 16 mm and 22 mm in thickness. Compacting machine belts are typically manufactured using polyamide, polyester and aramid fibers. When used on such machines, the belt must undergo several looping processes, wrapping around several rolls or cylinders often having different diameters. As the belt travels through the machine, its internal and external surfaces reverse from roll to roll.

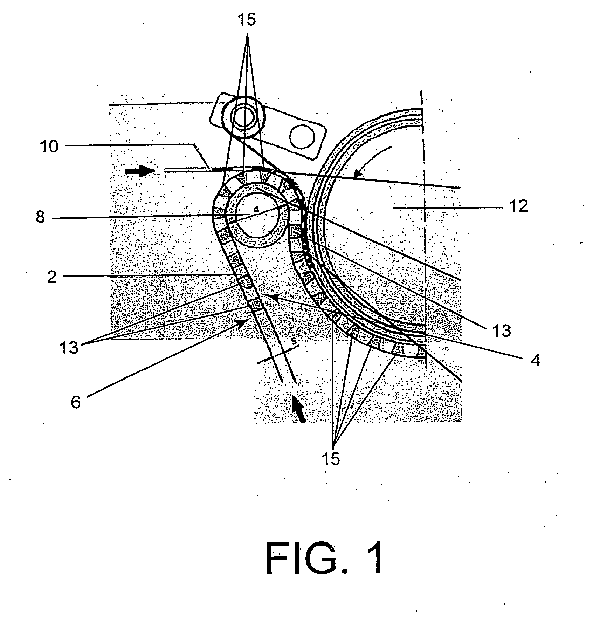

Depicted in FIG. 1 is a typical textile compacting machine. A compacting belt 2, having an internal machine surface 4 and an external product surface 6 and traveling in the direction of the arrows in the figure, first wraps around a driving roll 8. At the point of the driving roll 8, the textile or cloth 10 to be compacted is introduced into the compacting machine and placed in contact with the external surface 6 of the compacting belt 2. The cloth 10 now carried by the compacting belt 2, becomes sandwiched 11 between the compacting belt 2 and a steam heated cylinder 12. The combined effect of compressing the cloth 10 between the compacting belt 2 and the steam heated cylinder 12 and heating the cloth with steam, results in for example a knitted fabric material cloth that is dimensionally stabilized and resistant to shrinkage.

The compacting belt's thickness, however, is problematic. When the belt 2 wraps around the driving roll 8, its internal machine side 4 becomes compressed and shortens while its external product side 8 becomes stretched and elongated. When the curvature of the belt 2 is reversed at the steam heated cylinder 12, the external product side 6 now becomes compressed and shortens while the internal machine side 4 becomes stretched and elongated. This alternating compressing and stretching of the belt's opposing surfaces is depicted by the boxes 13 and the trapezoidal shapes 15 in FIG. 1.

Due to the stretching and compressing of the belt 2, the external product side surface 6 can lose its consistency or smoothness. As a result, the external product side surface 6 becomes irregular, leading to marking problems on the processed cloth's surface. In addition, cracks can occur in the belt, limiting the serviceable life of the belt. It has also been demonstrated that the serviceable life is not only reduced by the movements of the compacting belt around the cylinders or rolls, but also by other influences on the belt, such as residue from acid dyes or bleaching agents that are introduced into the belt from the materials being processed.

Attempts have been made to solve the above-described problems associated with prior belts. For example, U.S. Patent No. 6,479,414 ("the'414 patent") discloses a textile machine belt consisting of a ground textile, a belt layer, an elastic knit fabric and an uppermost layer. As disclosed, the elastic knit fabric is a warp or circular knitted article in the form of a knitted sleeve. Elasticity of the machine belt comes from the physical structure of the elastic fabric being a knit because an inherent characteristic of certain knitted articles is their elasticity. That is, a knitted article's structure allows it to expand and contract (stretch and compress) without affecting the article's integrity.

The instant belt differs from that of the'414 patent in that the elastic base layer of the instant belt is flat woven with elastic fibers and not knitted with in-elastic fibers. Therefore, the elasticity of the instant belt derives from the use of elastic fibers in the flat woven elastic base layer. Hence, the instant belt can be produced using a variety of textile methods and is not, as is the case with the '414 patent, limited to only warp knitting or circular knitting techniques. Furthermore, the structure of the instant belt differs over that of the '414 belt in that the external product side and the internal machine side of the instant belt consist of batt fibers that have been needled into the base layers. The belt of the '414 patent speaks of a "stitched" felt layer 2 and fibrous layer 4 between which a knitted layer 3 is disposed. But again, the elasticity is due to the structure, i.e., the knit rather than due to the elastic material itself.

U.S. Patent Application 2005/0181694 A1 describes an industrial fabric including a base layer, a batt layer and at least one low-melt polymeric film layer, which has been needled into the batt layer and subsequently thermoformed to at least partially encapsulate the fibers of the batt layer.

European Patent application EP0446355 A 1 describes a needled felt for papermaking comprising fibers composed of a block polyamide copolymer having a hard segment of a polyamide component such as a block polyamide copolymer and a soft segment of a polyether component.

International Patent application WO 2004/072368 describes a fabric belt for dewatering machines, comprising a base woven fabric consisting of longitudinal and transversal threads. Said base woven fabric contains elastic transversal and/or longitudinal threads, which are at least partly produced from an elastic material.

Accordingly, a need exists for a belt that is capable of being subjected to alternating and repetitive stretching and compressing of its surfaces so that its external machine side surface does not become irregular, resulting in marking of a textile cloth processed thereon. Furthermore, a need exists for a belt that is capable of being manufactured using a variety of textile methods. The instant invention is directed to overcoming shortcomings associated with prior art belts.

### SUMMARY OF THE INVENTION

It is therefore a principal object of the invention to provide a belt that is capable of repetitive and alternating stretching and compressing without adversely affecting the belt's desired properties.

It is a further object of the invention to provide a belt where the belt's elasticity allows both surfaces of the belt to stretch and elongate as well as to compress and shorten based on the belt's orientation when wrapped around various rolls or cylinders.

Yet another object of the invention is to provide a multi-base belt wherein at least one of the base layers is elastic.

It is a further object of the invention to provide an elastic belt having an elastic base layer, wherein the belt's elasticity is derived from elastic fibers used to construct the elastic base layer.

A still further object of the invention is to provide an elastic belt that has needled batt layers for both its internal machine side and external product side surfaces.

Yet another objective of the invention is to provide an elastic belt that is capable of being produced using a variety of textile methods.

A still further objective of the instant invention is to provide a belt that is more durable, resulting in an increased service life.

These and other objects and advantages are provided by the instant invention. In this regard, the instant invention is directed to a machine belt that is used in the manufacturing of textiles. The instant belt comprises a conventional base layer, an elastic base layer and batt fibers that are needled from an exterior surface of each base layer, into both base layers. The elastic base layer is flat woven and is constructed using elastic fibers made from natural, nitrile or silicone rubber. In addition, synthetic materials, such as but not limited to, LYCRA^{®} and ELASTAN^{®} may be used to construct the elastic base layer. In order to protect the elastic fibers from significant damage during the batt needling process, the elastic fibers are coated with a polymeric resin such as polyurethane or silicone. Alternatively, the elastic fibers can be processed into a composite yarn such that the elastic fibers are primarily in the core or central portion of the yarn and are wrapped with an outer layer of fiber such as polyester. This outer layer can be a multifilament yarn which is twisted or spiraled around the elastic core, or may be of all multifilament construction. In order to further protect the composite elastic yarns from significant needling damage, the composite yarns may also be coated with a polymeric resin such as polyurethane or silicone.

The various features of novelty which characterize the invention are pointed out in particularity in the claims annexed to and forming a part of this disclosure. For a better understanding of the invention, its operating advantages and specific objects attained by its uses, reference is made to the accompanying descriptive matter in which preferred embodiments of the invention are illustrated in the accompanying drawings in which corresponding components are identified by the same reference numerals.

### BRIEF DESCRIPTION OF THE DRAWINGS

The following detailed description, given by way of example and not intended to limit the present invention solely thereto, will best be appreciated in conjunction with the accompanying drawings, wherein like reference numerals denote like elements and parts, in which:
FIG. 1 is a cross-sectional view of a textile compacting machine;
FIG. 2 is a cross-sectional view of a multi-base needled belt, according to one embodiment of the instant invention;
FIG. 3 is a cross-sectional view of a multi-base needled belt, according to one embodiment of the instant invention;
FIG. 4 is a cross-sectional view of the multi-base needled belt that was manufactured according to the embodiment of FIG. 3; and
FIG. 5 is a side view of a composite yarn in the expanded state showing the double fiber layer of the outer protective layer, according to one embodiment of the instant invention.

### DETAILED DESCRIPTION OF THE PREFERRED EMBODIMENTS

The instant invention relates to a multi-base needled belt for use in textile manufacturing. As previously discussed, prior art belts are problematic because their inelasticity causes the surface of the belts to become cracked and irregular, resulting in marking on a textile cloth being processed. In addition, the problems associated with the prior art belts result in less durable belts that have shorter service lives.

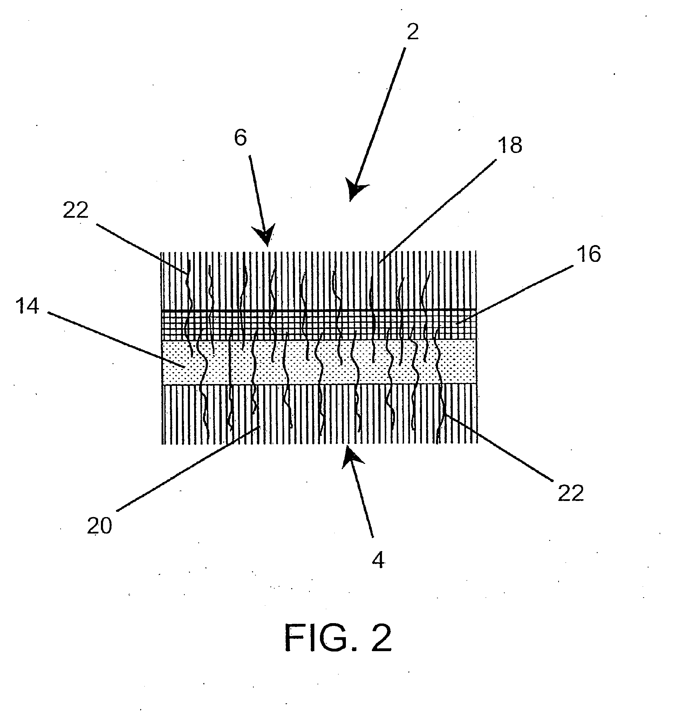

The instant invention provides a belt that is more elastic and more durable than prior belts. FIG. 2 depicts the configuration of a multi-base needled belt constructed according to one embodiment of the instant invention. As depicted, a conventional base layer 14 is located adjacent to the internal machine side 4 of the belt 2 and an elastic base layer 16 is located adjacent to the external product side 6 of the belt 2. In order to attach the conventional base layer 14 and the elastic base layer 16 to one another, a top or external batt layer 18 and a bottom or internal batt layer 20 are needled from an exterior surface of each base layer into both base layers, 14 and 16. Therefore, the needled batt fibers 22 physically join the two layers to each other. The batt layers, 18 and 20, also provide a product side and a machine side contact surface.

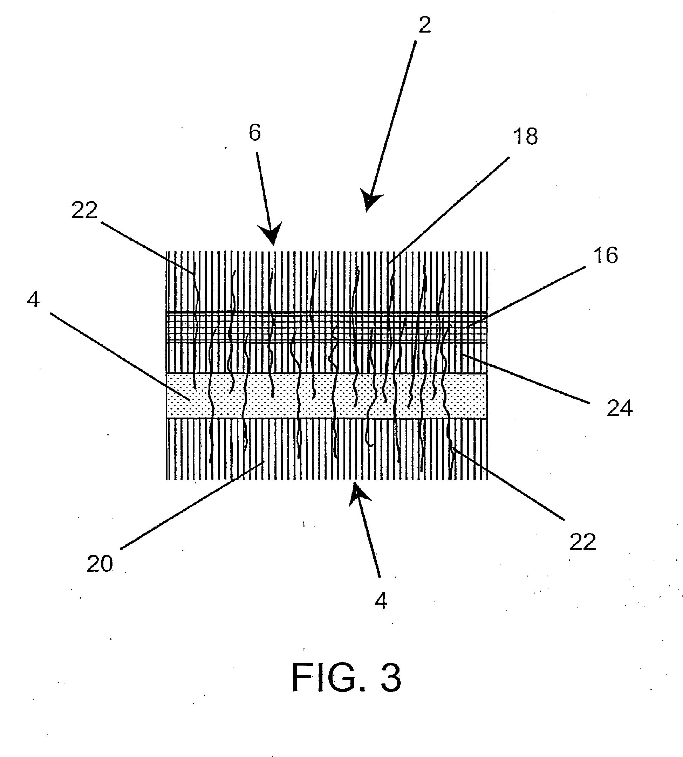

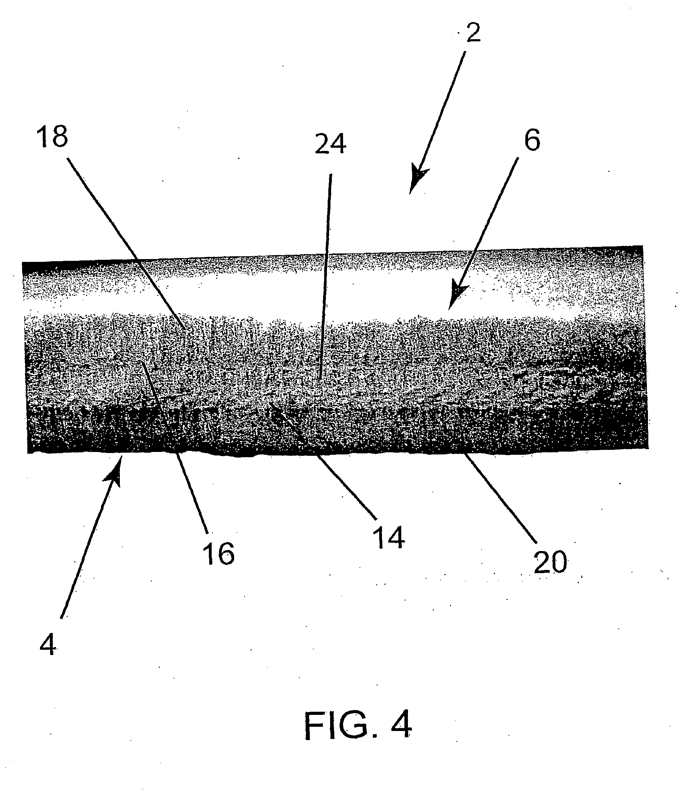

FIG. 3 depicts a multi-base needled belt constructed according to another embodiment of the instant invention. As depicted, a conventional base layer 14 is located adjacent to the internal machine side 4 of the belt 2 and an elastic base layer 16 is located adjacent to the external product side 6 of the belt 2. In this embodiment, however, the conventional base layer 14 and the elastic base layer 16 are separated by an additional batt layer 24. By adding this additional batt layer 24 to the belt 2, the elastic base layer 16 is positioned closer to the external product side surface 6 of the belt 2. In order to attach the conventional base layer 14, the additional batt layer 24 and the elastic base layer 16 to each another, a top or external batt layer 18 and a bottom or internal batt layer 20 are needled from an exterior surface of each base layer into the additional batt layer 24 and both base layers, 14 and 16. Therefore, the needled batt fibers 22 physically join the three layers to each other. The batt layers, 18 and 20, also provide a product side and a machine side contact surface. FIG. 4 is a photograph of a cross-section taken through a belt constructed according to this embodiment of the instant invention.

As a result of positioning the elastic base layer 16 closer to the external product side surface 6 of the belt 2 in both of the disclosed embodiments, the belt becomes more flexible. Therefore, the increased flexibility of the belt 2 reduces the formation of inconsistencies or irregularities in the external batt layer 18, thereby reducing marking of the textile cloth being processed. As is readily apparent to one skilled in the art, it is also possible to include an elastic base layer 16 adjacent to the internal machine side 4 of the belt 2. This results in a belt that has increased flexibility on its internal machine side 4 as well.

The conventional base layer 14 can be woven or knitted from monofilament, plied monofilament, multifilament or plied multifilament yarns or fibers. The yarns are typically extruded from any one of the synthetic polymeric resins, such as polyamide and polyester resins, used for this purpose by those of ordinary skill in the art.

The elastic base layer 16 is preferably flat woven. Standard elastic fibers, however, cannot be used for the elastic base layer 16 because standard elastic fibers are not suitable for the needling process as needling can damage the fibers. Therefore, the elastic fibers must be further processed to include a protective layer that may either be a physical or chemical treatment. Elastic fibers suitable for use in the elastic layer 16, include but are not limited to natural, nitrile or silicone rubber, LYCRA^{®} and ELASTAN^{®}. One way of protecting the elastic fibers is to process the fibers into a composite yarn such that the elastic fibers are primarily in the core or central portion of the yarn and wrapped with an outer protective layer of fiber such as, but not limited to, polyamide or polyester. This outer protective layer can be a multifilament yarn which is twisted or spiraled around the elastic core, or it may be of all multifilament construction.

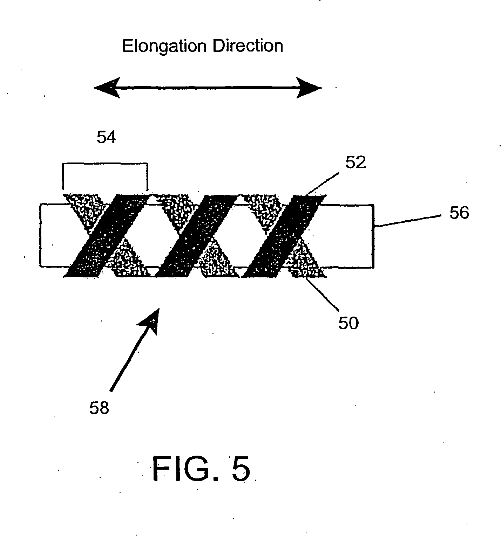

In order to allow the elastic core fibers to maintain their elasticity when fibers such as polyamide and polyester are used for the outer protective layer, the outer protective layer may comprise two fiber layers that are wrapped in a spiral manner around the elastic core in opposite directions. That is, as depicted in Fig. 5, the first fiber layer 50 of the outer protective layer is wrapped or spiraled onto the elastic core 56 in one direction. Once the first fiber layer 50 is spiraled on, a second fiber layer 52 is wrapped or spiraled onto the first fiber layer 50 in a direction opposite to that of the first layer.

In this configuration, the spiralized outer protective layer remains "closed" when the elastic composite yarn is not under tension or relaxed. This results in an clastic core 56 that is fully covered by the outer protective layer, which prevents the elastic core 56 from being significantly damaged during the needling process. As depicted in Fig. 5, when the composite yarn 58 is placed under tension or stretched in the direction indicated in the figure, the spiralized first fiber 50 and second fiber 52 of the outer protective layer "open" into an "X" shape 54. This allows the elastic core 56 and hence the composite yarn 58 to stretch or expand in the direction indicated in the figure.

Alternatively, the elastic fibers can be protected with the application of a polymeric coating, such as but not limited to, polyurethane or silicone. Treatment of the elastic fibers with these coatings prevents significant needling damage and assures good adhesion between the batt fibers and the elastic yarns. These coatings may also be applied to the composite yarns in order to provide further protection against significant needling damage and assure good adhesion between the batt fibers and the elastic yarns. The protective coatings further include coatings that are sprayed or dip-coated on the elastic yarns. Also, the coatings can be in the form of a sheath that is melt bonded to the yarn or so called sheath/core yarn produced for example during yarn extrusion or other methods known to those skilled in the art of yarn production. Additional methods to treat the yarn surface of the elastic yarns will be readily apparent to those skilled in the art.

Furthermore, because the elasticity of the instant belt derives from an elastic layer that is constructed with elastic yarns or fibers, the instant belt is not limited to flat weaves. Instead, additional textile forming techniques known to those skilled in the art, may be used to construct the elastic layer of the instant invention.

In addition, while needling is referred to as the means for attaching the layers of the laminated structure together, other ways will be apparent to those skilled in the art. For example lamination or attachment by heat fusion might be utilized especially if components of certain layers contain a material with a lower melting point. In this regard the batt layer(s) could include a "low melt" binder fiber, especially the situation where the batt has an interior batt layer. One might consider a combination of both needling and some heat fusion or other attachment mechanism suitable for the purpose. In this regard such a combination will reduce the total amount of needling required to hold the structure together, positively impacting the desired result of minimizing damage to the elastic yarns. In the case of fusion attachment for example, the amount of fusion and the amount of "low melt" material and its location would have to be balanced against the need to have the belt perform in the desired manner as to both elongation and relaxation in the machine direction as well as the through thickness compression and rebound (resiliciency). Too much "fusion"may affect the desired elastic behavior so a proper balancing needs to occur.

Although a preferred embodiment of the present invention and modifications thereof have been described in detail herein, it is to be understood that this invention is not limited to this precise embodiment and modifications, and that other modifications and variations may be effected by one skilled in the art without departing from the scope of the invention as defined by the appended claims. The use of the instant belt in accordance with the invention is not limited to machines for rendering textiles shrinkproof, in other words, the instant belt can be used anywhere where the requirements mentioned above are placed on the quality and serviceable life of the belt.

## Claims

1. A multi-base textile belt (2) comprising:
a synthetic polymeric resin base layer (14) woven or knitted with synthetic polymeric resin yarns adjacent to a machine-side (4) of said belt (2);
an elastic base layer (16) woven with elastic yarns adjacent to a product forming side (6) of said belt (2);
a first batt layer (20) on the machine side of said belt attached to said synthetic polymeric base layer (14), wherein said first batt layer (20) is attached by a needling process to said elastic base layer (16) through said synthetic polymeric base layer (14); and
a second batt layer (18) on the product forming side of said belt attached to said elastic base layer (16), wherein said second batt layer (18) is attached by a needling process to said synthetic polymeric base layer (14) through said elastic base layer (16).

2. The multi-base textile belt as claimed in claim 1, wherein said synthetic polymeric yarns are monofilament, plied monofilament, multifilament or plied multifilament yarns.

3. The multi-base textile belt as claimed in one of claims 1 or 2, wherein said synthetic polymeric resin is a polyamide or polyester resin.

4. The multi-base textile belt as claimed in claim 1, wherein said elastic yarns are selected from the group consisting of natural rubber, nitrile rubber, silicone rubber, LYCRA® and ELASTAN®.

5. The multi-base textile belt as claimed in claim 1, wherein said elastic yarns further include a protective layer.

6. The multi-base textile belt as claimed in claim 5, wherein said protective layer is a polymeric coating.

7. The multi-base textile belt as claimed in claim 6 wherein said protective layer is a silicone coating.

8. The multi-base textile belt as claimed in claim 6, wherein said polymeric coating is a polyurethane.

9. The multi-base textile belt as claimed in claim 5, wherein said protective layer is sprayed or dip-coated onto the elastic yarns or a sheath that is melt bonded to the elastic yarns.

10. The multi-base textile belt as claimed in one of claims 1 to 9, wherein at least one or both of said batt layers are attached by needling.

11. The multi-base textile belt as claimed in claim 1, wherein said elastic yarns are composite yarns having a core comprised of at least one elastic yarn and wherein disposed on said core is at least one protective layer of fiber.

12. The multi-base textile belt as claimed in claim 11, wherein said at least one protective layer of fiber is wrapped onto said core in a twisted or spiraled manner.

13. The multi-base textile belt as claimed in claim 1, wherein said elastic yarns are composite yarns having a core comprised of at least one elastic yarn and wherein disposed on said core is a first protective layer of fiber and a second protective layer of fiber.

14. The multi-base textile belt as claimed in claim 13, wherein said first protective layer of fiber is wrapped onto said core in a first direction and said second protective layer of fiber is wrapped onto said first protective layer of fiber in a second direction that is opposite to the first direction.

15. The multi-base textile belt as claimed in claim 11, wherein said at least one protective layer of fiber further includes a polymeric coating.

16. The multi-base textile belt as claimed in claim 13, wherein said first protective layer of fiber and a second protective layer of fiber further include a polymeric coating.

17. The multi-base textile belt (2) of claim 1 further comprising:
a third batt layer (24) disposed between said synthetic polymeric resin base layer (14) and said elastic base layer (16), wherein;
said synthetic polymeric resin base layer (14) is woven or knitted of synthetic polymeric resin yams;
said elastic base layer (16) is woven of elastic yarns;
said first batt layer (20) is attached to said woven or knitted synthetic polymeric resin base layer (14), said first batt layer (20) is attached by a needling process to said third batt layer (24) through said synthetic polymeric resin base layer (14), and said first batt layer (20) is attached by a needling process to said woven elastic base layer (16) through said synthetic polymeric resin base layer (14) and said third batt layer (24); and
said second batt layer (18) is attached to said woven elastic base layer (16), said second batt layer (18) is attached by a needling process to said third batt layer (24) through said elastic base layer (16), and said second batt layer (18) is attached by a needling process to said woven or knitted synthetic polymeric resin base layer (14) through said elastic base layer (16) and said third batt layer (24).

## Patentansprüche

1. Mehrlagen-Textilgurt (2), mit
- einer Grundschicht (14) aus einem synthetischen Polymerharz, welche aus Fäden aus synthetischem Polymerharz gewebt oder gestrickt ist und benachbart zur Maschinenseite (4) des genannten Gurtes (2) liegt;
- einer elastischen Grundschicht (16), die aus elastischen Fäden gewebt ist und benachbart zur Produktformseite (6) des genannten Gurtes liegt;
- einer ersten Vliesschicht (20) auf der Maschinenseite des genannten Gurtes, welche auf der genannten Grundschicht (14) aus einem synthetischen Polymerharz angebracht ist, wobei die genannte erste Vliesschicht (20) mittels Vernadeln durch die genannte Grundschicht (14) aus einem synthetischen Polymerharz hindurch mit der genannten elastischen Grundschicht (16) verbunden ist; und
- einer zweiten Vliesschicht (18) auf der Produktformseite des genannten Gurtes, welche auf der genannten elastischen Grundschicht (16) angebracht ist, wobei die genannte zweite Vliesschicht (18) mittels Vernadeln durch die genannte Grundschicht (14) aus einem synthetischen Polymerharz hindurch mit der genannten elastischen Grundschicht (16) verbunden ist.

2. Mehrlagen-Textilgurt nach Anspruch 1, bei dem die genannten Fäden aus synthetischem Polymerharz Monofilamente, mehrlagige Monofilamente, Multifilamente oder mehrlagige Monofilamente sind.

3. Mehrlagen-Textilgurt nach einem der Ansprüche 1 und 2, bei dem das genannte Polymerharz ein Polyamid- oder ein Poliesterharz ist.

4. Mehrlagen-Textilgurt nach Anspruch 1, bei dem die genannten elastischen Fäden aus der Gruppe ausgewählt sind, die von natürlichem Kautschuk, Nitrilkautschuk, Siliconkautschuk, Lycra® und Elastan® gebildet wird.

5. Mehrlagen-Textilgurt nach Anspruch 1, bei dem die genannten elastischen Fäden weiterhin mit einer Schutzschicht versehen sind.

6. Mehrlagen-Textilgurt nach Anspruch 5, bei dem die genannte Schutzschicht eine Polymerbeschichtung ist.

7. Mehrlagen-Textilgurt nach Anspruch 6, bei dem die genannte Schutzschicht eine Siliconbeschichtung ist.

8. Mehrlagen-Textilgurt nach Anspruch 6, bei dem die genannte polymere Beschichtung ein Polyurethan ist.

9. Mehrlagen-Textilgurt nach Anspruch 5, bei dem die genannte Schutzschicht auf die elastischen Fäden aufgesprüht oder durch Tauchbeschichtung aufgebracht ist oder aus einer Hülle besteht, welche auf den elastischen Fäden durch Aufschmelzen befestigt ist.

10. Mehrlagen-Textilgurt nach einem der Ansprüche 1 bis 9, bei dem mindestens eine oder beide Vliesschichten durch Vernadeln angebracht sind.

11. Mehrlagen-Textilgurt nach Anspruch 1, bei dem die genannten elastischen Fäden Verbundfäden sind, welche einen Kern aus mindestens einem elastischen Faden aufweisen, auf welchem mindestens eine Schutzschicht für die Faser aufgebracht ist.

12. Mehrlagen-Textilgurt nach Anspruch 11, bei dem die genannte mindestens eine Schutzschicht aus einer Faser durch Verzwirnen oder Aufspulen um den genannten Kern gewickelt ist.

13. Mehrlagen-Textilgurt nach Anspruch 1, bei dem die genannten elastischen Fäden Verbundfäden mit einem Kern aus mindestens einem elastischen Faden sind, und wobei eine erste Schutzschicht aus einer Faser und eine zweite Schutzschicht aus einer Faser auf den genannten Kern aufgebracht ist.

14. Mehrlagen-Textilgurt nach Anspruch 13, bei dem die genannte erste Schutzschicht aus einer Faser auf den genannten Kern in einer ersten Richtung aufgewickelt und die genannte zweite Schutzschicht aus einer Faser auf die genannte erste faserige Schutzschicht in einer zweiten Richtung, die der ersten Richtung entgegengesetzt ist, aufgewickelt ist.

15. Mehrlagen-Textilgurt nach Anspruch 11, bei dem die genannte mindestens eine Schutzschicht aus einer Faser weiterhin eine polymere Beschichtung aufweist.

16. Mehrlagen-Textilgurt nach Anspruch 13, bei dem die genannte erste Schutzschicht aus einer Faser und eine zweite Schutzschicht aus einer Faser weiterhin eine polymere Beschichtung aufweisen.

17. Mehrlagen-Textilgurt (2) nach Anspruch 1, welcher weiterhin
- eine dritte Vliesschicht (24) aufweist, die zwischen der genannten Grundschicht (14) aus einem synthetischen Polymerharz und der genannten elastischen Grundschicht (16) angeordnet ist, wobei
- die aus einem synthetischen Polymerharz bestehende genannte Grundschicht (14) aus synthetischen Polymerharzfäden gewebt oder gestrickt ist;
- die genannte elastische Grundschicht (16) aus elastischen Fäden gewebt ist;
- die genannte erste Vliesschicht (20) an der genannten gewebten oder gestrickten Grundschicht (14) aus synthetischem Polymerharz angebracht ist, wobei die genannte erste Vliesschicht (20) mittels Vernadeln durch die genannte Grundschicht (14) aus synthetischem Polymerharz hindurch mit der genannten dritten Vliesschicht (24) sowie die genannte erste Vliesschicht (20) mittels Vernadeln durch die genannte Grundschicht (14) aus synthetischem Polymerharz und die genannte dritte Vliesschicht (24) hindurch mit der genannten gewebten elastischen Grundschicht (16) verbunden ist; und
- die genannte zweite Vliesschicht (18) an der genannten gewebten elastischen Grundschicht (16) angebracht ist, wobei die genannte zweite Vliesschicht (18) mittels Vernadeln durch die genannte elastische Grundschicht (16) hindurch mit der genannten dritten Vliesschicht (24) und die genannte zweite Vliesschicht (18) mittels Vernadeln durch die genannte elastische Grundschicht (16) und die genannte dritte Vliesschicht (24) hindurch mit der genannten gewebten oder gestrickten Grundschicht (14) aus synthetischem Polymerharz verbunden ist.

## Revendications

1. Courroie textile à bases multiples (2), comprenant :
une couche de base en résine polymère synthétique (14), tissée ou tricotée à partir de fils en résine polymère synthétique, adjacente à un côté machine (4) de ladite courroie (2) ;
une couche de base élastique (16) tissée à partir de fils élastiques, adjacente à un côté de formage de produit (6) de ladite courroie (2) ;
une première couche de non-tissé (20) sur le côté machine de ladite courroie, attachée à ladite couche de base en résine polymère synthétique (14), dans laquelle ladite première couche de non-tissé (20) est attachée à ladite couche de base élastique (16) par une procédure d'aiguilletage à travers ladite couche de base en résine polymère synthétique (14) ; et
une deuxième couche de non-tissé (18) sur le côté de formage de produit de ladite courroie, attachée à ladite couche de base élastique (16), dans laquelle ladite deuxième couche de non-tissé (18) est attachée à ladite couche de base en résine polymère synthétique (14) par une procédure d'aiguilletage à travers ladite couche de base élastique (16).

2. Courroie textile à bases multiples selon la revendication 1, dans laquelle lesdits fils en polymère synthétique sont des monofilaments, des monofilaments à plis, des multifilaments ou des multifilaments à plis.

3. Courroie textile à bases multiples selon l'une des revendications 1 ou 2, dans laquelle ladite résine polymère synthétique est une résine de polyamide ou de polyester.

4. Courroie textile à bases multiples selon la revendication 1, dans laquelle lesdits fils élastiques sont choisis dans le groupe composé de caoutchouc naturel, de caoutchouc nitrile, de caoutchouc de silicone, le Lycra® et l'Elasthanne®.

5. Courroie textile à bases multiples selon la revendication 1, dans laquelle lesdits fils élastiques comprennent en plus une couche de protection.

6. Courroie textile à bases multiples selon la revendication 5, dans laquelle ladite couche de protection est un revêtement polymère.

7. Courroie textile à bases multiples selon la revendication 6, dans laquelle ladite couche de protection est un revêtement au silicone.

8. Courroie textile à bases multiples selon la revendication 6, dans laquelle ledit revêtement polymère est un polyuréthanne.

9. Courroie textile à bases multiples selon la revendication 5, dans laquelle ladite couche de protection est appliquée aux fils élastiques par pulvérisation ou par immersion, ou bien est une enveloppe liée par fusion aux fils élastiques.

10. Courroie textile à bases multiples selon l'une des revendications 1 à 9, dans laquelle au moins une ou les deux couches de non-tissé sont attachées par aiguilletage.

11. Courroie textile à bases multiples selon la revendication 1, dans laquelle lesdits fils élastiques sont des fils composites présentant un noyau composé d'au moins un fil élastique, et dans laquelle ledit noyau est enveloppé par au moins une couche de protection en fibres.

12. Courroie textile à bases multiples selon la revendication 11, dans laquelle ladite au moins une couche de protection en fibres est enroulée sur ledit noyau de façon retordue ou spiralée.

13. Courroie textile à bases multiples selon la revendication 1, dans laquelle lesdits fils élastiques sont des fils composites présentant un noyau composé d'au moins un fil élastique, et dans laquelle ledit noyau comporte une première couche de protection en fibres et une deuxième couche de protection en fibres.

14. Courroie textile à bases multiples selon la revendication 13, dans laquelle ladite première couche de protection en fibres est enroulée sur ledit noyau selon une première direction, et que ladite deuxième couche de protection en fibres est enroulée sur ladite première couche de protection en fibres selon une deuxième direction qui est opposée à la première direction.

15. Courroie textile à bases multiples selon la revendication 11, dans laquelle ladite au moins une couche de protection en fibres comprend en plus un revêtement polymère.

16. Courroie textile à bases multiples selon la revendication 13, dans laquelle ladite première couche de protection en fibres et une deuxième couche de protection en fibres comprennent en plus un revêtement polymère.

17. Courroie textile à bases multiples (2) selon la revendication 1, comprenant en plus :
une troisième couche de non-tissé (24) disposée entre ladite couche de base en résine polymère synthétique (14) et ladite couche de base élastique (16), dans laquelle :
ladite couche de base en résine polymère synthétique (14) est tissée ou tricotée à partir de fils de résine polymère synthétique ;
ladite couche de base élastique (16) est tricotée à partir de fils élastiques ;
ladite première couche de non-tissé (20) est attachée à ladite couche de base en résine polymère synthétique (14) tissée ou tricotée, ladite première couche de non-tissé (20) étant attachée à ladite troisième couche de non-tissé (24) par une procédure d'aiguilletage à travers ladite couche de base en résine polymère synthétique (14), et ladite première couche de non-tissé (20) est attachée à ladite couche de base élastique tissée (16) par un procédé d'aiguilletage à travers ladite couche de base en résine polymère synthétique (14) et ladite troisième couche de non-tissé (24) ; et
ladite deuxième couche de non-tissé (18) est attachée à ladite couche de base élastique tissée (16), ladite deuxième couche de non-tissé (18) étant attachée à ladite troisième couche de non-tissé (24) par une procédure d'aiguilletage à travers ladite couche de base élastique (16), ladite deuxième couche de non-tissé (18) étant attachée à ladite couche de base en résine polymère synthétique (14) tissée ou tricotée par une procédure d'aiguilletage à travers ladite couche de base élastique (16) et ladite troisième couche de non-tissé (24).
